Europäisches Patentamt

European Patent Office

Office européen des brevets

(11) Publication number: **0 039 198**
**B1**

(12) # EUROPEAN PATENT SPECIFICATION

(45) Date of publication of patent specification: **18.01.84**     (51) Int. Cl.³: **A 01 K 87/00**

(21) Application number: **81301772.0**

(22) Date of filing: **22.04.81**

(54) Fishing rod.

(30) Priority: **25.04.80 JP 57604/80**
**27.11.80 JP 170731/80**
**27.11.80 JP 170732/80**

(43) Date of publication of application:
**04.11.81 Bulletin 81/44**

(45) Publication of the grant of the patent:
**18.01.84 Bulletin 84/3**

(84) Designated Contracting States:
**DE FR GB IT SE**

(56) References cited:
**FR - E - 75 890**
**GB - A - 1 172 665**
**GB - A - 2 019 519**
**US - A - 1 371 261**
**US - A - 1 961 968**
**US - A - 3 401 482**

(73) Proprietor: **SHIMANO INDUSTRIAL COMPANY LIMITED**
**77, 3-cho Oimatsu-cho Sakai-shi**
**Osaka (JP)**

(72) Inventor: **Shimano, Keizo**
**81, 3-cho, Midorigaoka-Minamimachi**
**Sakai-shi Osaka (JP)**

(74) Representative: **Szczuka, Jan Tymoteusz et al,**
**Cruikshank & Fairweather 19 Royal Exchange Square**
**Glasgow G1 3AE Scotland (GB)**

Courier Press, Leamington Spa, England.

Fishing rod

This invention relates to a fishing rod comprising a first rod section provided with a grip portion and tapering towards a forward end of said first rod section, and a second rod section provided with a tip portion and a connecting portion connected directly or indirectly to the forward end of said first rod section and tapering towards said tip portion in a direction away from said connecting portion.

In general, known fishing rods are circular in cross section throughout their full length, and are provided with a fishing reel at a grip portion and a plurality of fishing line-guides extending in spaced-apart relation towards the tip of the rod for guiding line drawn out of the reel. In use, an angler grasps the grip portion and swings the rod to cast the fishing line and rig at the free end thereof into the water remote from himself.

Such a fishing rod with its circular cross section is however subjected to a significant air resistance during the casting action. This problem is particularly acute when casting into a strong wind so that the angler is hard put to cast the fishing line any appreciable distance from himself due to the heavy casting motion.

The above problem could be overcome by the use of a fishing rod which is elliptical or stream-lined in cross section, and by casting the rod in the general direction of the major axis of the elliptical or stream-lined cross section. With a rod of such a cross-section there arises, however, a new problem. Although such a rod has a reduced air resistance during casting, it has a considerably larger resistance to bending in the plane of its major axis corresponding to the casting plane than in the plane of its minor axis. Thus bending of the rod assumes an anisotropic or directional character. In particular, during casting, the tip of the fishing rod tends to bend in the plane of the minor axis i.e. transversely of the casting plane, thereby making accurate casting considerably more difficult. Also, the bending of the tip in the plane of the minor axis makes it more difficult for an angler to bring in a hooked fish, and/or with a greater load acting on the line in the plane of the major axis in which plane there is only a reduced bending capability, breaking of the line can occur.

Furthermore, due to the directional bending of the tip of the angler obtains only a reduced sensitivity to bite detection so that the size of his catch may be adversely affected.

It is an object of the present invention to overcome or minimize one or more of the above disadvantages.

The present invention provides a fishing rod comprising a first rod section provided with a grip portion and tapering towards a forward end of said first rod section, and a second rod section provided with a tip portion and a connecting portion connected directly or indirectly to the forward end of said first rod section and tapering towards said tip portion in a direction away from said connecting portion, characterised in that said first rod section has a transverse cross-sectional shape having a major axis larger than a minor axis thereof and said major axis extends in the casting plane of said rod so as to reduce air resistance during casting; said tip portion has a transverse cross-sectional area substantially smaller than the transverse cross-sectional area of the first portion and with lower air resistance, said tip portion being generally circular in cross section, that is having a first axis extending transversely of the casting plane of the rod and the same as or a maximum of 1.05 times larger than a second axis extending in said casting plane so as to avoid anisotropic bending of the tip portion transversely of the casting plane; and said connecting portion has a transverse cross-sectional shape which changes progressively from the transverse cross-sectional shape of the first rod section to that of said tip portion in a direction along said connecting portion towards said tip portion.

The first rod section with said grip portion or the first rod section and an intermediate third rod section connected thereto, with their transverse cross-sectional shape having a major axis in the casting plane larger than a minor axis transverse thereto having a substantially reduced air resistance during casting thereby enabling casting of a fishing rig to a greater distance. At the same time the use of transverse cross-sectional shape in which a first axis transverse to the casting plane is equal to or greater than a second axis in the casting plane resulting in substantially uniform, nondirectional, bending characteristics or increased bending in the casting plane, respectively, avoids problems arising from lateral bending i.e. bending transverse of the casting plane, during casting, and lateral swinging when a fish is hooked. Thus, an angler using a fishing rod of the invention can accurately cast the rig with less effort and easily bring in a hooked fish.

In a fishing rod of the invention the first and second rod sections may be formed integrally with each other, but preferably the first rod section is separate from the second one and directly or indirectly joined thereto in use of the fishing rod. In particular the first and second rod sections may be joined together by a third rod section interposed between them. The third rod section has a cross-sectional shape which is generally elliptical or approximately elliptical. The third rod section is preferably streamlined as in the case of the first rod section.

The elliptical cross sectional shape of the third rod section, as with the first rod section, has a major axis larger than its minor axis and a major axis to minor axis ratio greater than 1. For the first rod section the ratio is preferably from 1.05 to 1.2 : 1, most preferably 1.1:1, and the ratio for the third rod section is preferably from 1.05 to 1.5:1, most preferably from 1.1 to 1.5:1, desirably 1.3:1.

The second rod section preferably has a transverse cross-sectional shape, at least at and in proximity to its tip portion, which is circular or slightly elliptical with major and minor axes (D, d), corresponding to said first and second axes, being in the ratio of the order of 1.05:1, preferably less than 1.05:1.

Further preferred features and advantages of the invention will appear from the following description given by way of example, of some preferred embodiments illustrated with reference to the accompanying drawings in which:

Fig. 1 is a partially cutaway side view of a first fishing rod of the invention;

Figs. 2 to 4 are transverse sections taken at different positions along the length of the rod of Fig. 1 at the lines II—II, III—III and IV—IV in Fig. 1, respectively;

Fig. 5 is a transverse section on an enlarged scale of another embodiment of the invention, at a lengthwise position corresponding to that of Fig. 2;

Fig. 6 is a transverse section on an enlarged scale of another embodiment of the invention, at a lengthwise position corresponding to that of Fig. 3; and

Fig. 7 is a transverse section on an enlarged scale of another embodiment at a lengthwise position corresponding to that of Fig. 4.

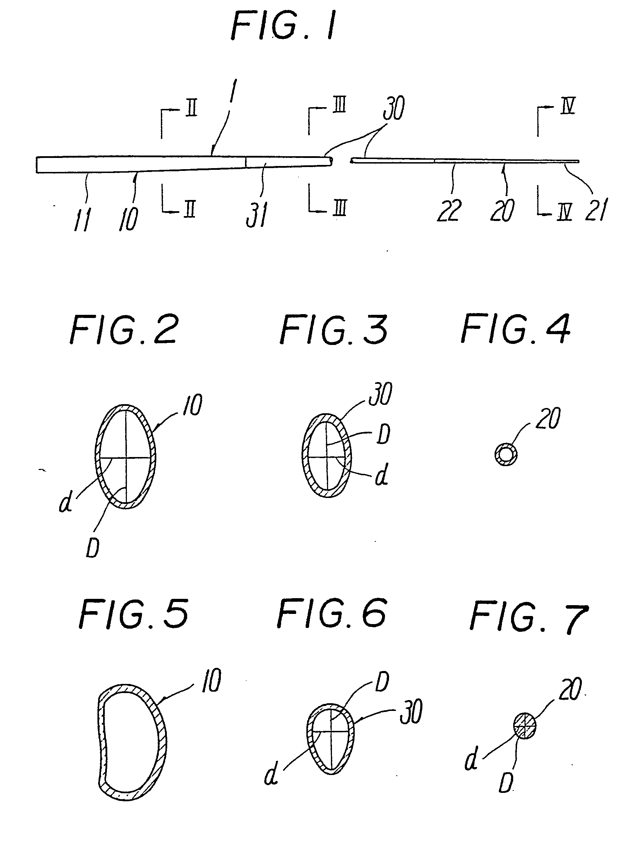

Fig. 1 shows a fishing rod 1 comprising a first rod section 10 having a grip portion 11 towards a rear end and tapering in a direction away from said rear end towards a forward end of said first rod section 11; a second rod section 20 having at its forward end a tip portion 21 and tapering towards the tip portion 21 in a direction away from a rear end of said second rod section 20; and a third rod section 30 interconnecting said first and second rod sections 10 and 20, the fishing rod 1 tapering progressively from said portion 11 to the tip portion 21. As shown in Fig. 1, the various rod sections 10, 20 and 30 are in the form of discrete members joined together.

The first rod section 10 is the thickest at its root or rear end on which is provided the grip portion 11, and the second rod section 20 is thinnest at the tip portion 21. The second and third rod sections 20, 30 have connecting portions 22, 31 at their rear ends for connection to the forward or distal ends of the third and first rod sections 30, 10, respectively.

The rod sections 10, 20 and 30 are made from sheet material and are hollow-moulded, the sheet material comprising a strong and durable fibre, such as glass fibre or carbon fibre, impregnated with phenol resin or epoxy resin and wound onto a mandrel and heated under pressure. The tip portion 21 of the second rod section 20 may however be either hollow as shown in Fig. 4, or solid as shown in Fig. 7.

The first and third rod sections 10 and 30 of the fishing rod 1, as shown in Figs. 2 and 3, are both generally elliptical in cross-section, the ellipse having a major axis $D$ and minor $d$ axis intersecting at right angles as shown in Figs. 2 and 3, and being generally symmetrical with respect to the major and minor axis $D,d$. The second rod section 20 has a generally circular cross-section tip portion 21 whilst its connecting portion 22 changes progressively from a generally circular cross-section to a generally elliptical cross-section in a direction away from the tip portion towards the connecting portion 22.

Since the fishing rod 1 comprises first and third rod sections 10 and 30 which are generally elliptical in cross-section and the second rod section 20 is generally circular in cross-section at its tip portion 21, an angler is able during casting to swing the fishing rod keeping the major axis $D$ of respective first and third rods 10 and 30 through the air in a desired casting direction with considerably reduced air resistance, thereby enabling a lighter and thus more precise casting action. Although the tip portion 21 of the second rod section 20 is circular in cross-section, its relatively small diameter, as compared with the first and third rod sections 10 and 30 means that it is still only subjected to a relatively small air resistance during casting. Hence, the tip portion 21 can maintain good casting efficiency without being subjected to increased bending laterally of the casting direction during casting and is also able to bend fully in the casting direction, whereby the angler retains good sensitivity to bite detection whilst avoiding the risk of line breakage by hooked fish due to additional forces in the casting plane in which the rod extends in use thereof.

The grip portion 11 of the first rod section 10 is also preferably generally elliptic in cross section in order to make it easy to grip.

As an alternative, the first rod section 10, except for the grip portion 11, and the third rod section 30 could both have a generally elliptical cross section which is substantially symmetrical about the major axis $D$ but is non-symmetrical about the minor axis $d$, the cross-sectional periphery at one side of the rod section at one end of the major axis $D$ having a larger radius of curvature than the peripheral radius of curvature at the opposite side, thereby providing a still more streamlined cross-sectional shape. Fig. 6 shows an example of such a cross-sectional construction, the cross-sectional shape being generally oval and having generally circular portions of smaller and larger diameter at respective opposite ends of the major axis $D$. Such a construction will still further reduce the air resistance to the rod during casting.

The generally elliptical in cross-section first rod section 10 preferably has a major axis $D$ to minor axis *d* ratio of from 1.05:1 to 1.2:1 so that the angler's hand can obtain a good and comfortable hold on the grip portion 11 to assist in obtaining better casting efficiency. If the ratio exceeds the upper limit of the above quoted range, the angler's hold on the grip 11 tends to be impaired whilst if the ratio falls below the lower limit, the air resistance is relatively little reduced. From various experiments, the best ratio has been found to be of the order of 1.1:1. The third rod section 30 preferably has a major axis to minor axis ratio of from 1.05:1 to 1.5:1 at its rear end thereby reducing the air resistance during casting whilst maintaining controllability.

The third rod section 30, which has an elliptical cross-section with a major axis to minor axis ratio within the above quoted preferred range, is subjected to less air resistance and has good freedom from lateral swinging, thereby enabling casting over a relatively large distance with good accuracy with respect to positioning of the hook in a desired place. If the ratio is above the upper limit of the above quoted preferred range, there arises the possibility of lateral swinging motion during casting with at the same time, reduced casting distance whilst if the ratio falls below the lower limit, there is only obtained a limited reduction in air resistance during casting. From the results of our experiments, it has been found that a ratio of 1.3:1 is particularly preferred for the third rod section 30 to reduce the air resistance during casting whilst maintaining casting efficiency.

Instead of being generally circular the tip portion 21 could also be somewhat elliptical in transverse cross-sectional shape as shown in Fig. 7, with a first, major, axis *D* transverse to the casting plane having a size relative to a second, minor, axis *d* in the casting plane in a ratio limited to, for example, about 1.05:1. Such an arrangement still further reduces the possibility of lateral bending (i.e. transversely of the casting plane) of the tip portion without significantly increasing air resistance due to the small overall cross-sectional area of the tip portion.

The first rod section 10 and third rod section 30, particularly when these have substantially different cross sections, are advantageously interconnected via a transitional connecting portion 31 at the rear end of the third rod section 30. Desirably the connecting portion has a cross-section which changes progressively between, at one end, a cross section corresponding to the first rod front portion cross-section and, at its other end a cross-section corresponding to the adjoining parts of the third rod section 30. The second rod section 20 is, when a third rod section 30 is used, also connected thereto through a similar transitional connecting portion 22 which changes in cross section between its ends to match the cross-sections of the adjoining parts of the third and second rod sections 30, 20. Of course when no third rod section 30 is used, the transitional connecting portion 22 is formed to match the cross-sections of the adjoining parts of the first and second rod sections 10, 20.

Naturally if desired more than one third rod section 30 may be used.

As will be apparent from the above, the first rod section bearing the grip, and the third, connecting, rod section are both made to have a more or less elliptical cross-sectional shape whereby an angler can swing the fishing rod during casting in the plane of the major axis of the elliptical cross-section with a reduced air resistance thereto. Also the more or less elliptical cross-section grip is easy to grip and at the same time automatically aligns the major axis with the natural casting direction as well as indicating the correct grip (with respect to the angular position of the rod about its longitudinal axis) also when reel or line guides are used.

On the other hand by avoiding an elliptical transverse cross-sectional shape at the tip portion with a major axis in the casting plane, undesirable lateral bending characteristics are avoided and a good bending capacity in the loading direction is retained at the tip portion. Thus, in use of the rod during casting, bending perpendicular to the casting direction is substantially avoided thereby facilitating accurate casting to a desired location. Also, the tip permits an angler to retain sensitivity to very delicate fish "bites" and avoids line breakage even with relatively large catches, by virtue of avoiding reduced bending of the tip portion such as would occur with a transverse cross-sectional shape similar to that of the first rod section i.e. with a major axis in the casting plane. In other words the bending characteristics (especially in regard to directional properties) of the tip portion are made to be independent of those of the first rod section to a significant extent.

**Claims**

1. A fishing rod (1) comprising a first rod section (10) provided with a grip portion (11) and tapering towards a forward end of said first rod section (10), and a second rod section (20) provided with a tip portion (21) and a connecting porton (22) connected directly or indirectly to the forward end of said first rod section (10) and tapering towards said tip portion (21) in a direction away from said connecting portion (22), characterized in that said first rod section (10) has a transverse cross-sectional shape having a major axis (*D*) larger than a minor axis (*d*) thereof and said major axis (*D*) extends in the casting plane of said rod so as to reduce air resistance during casting; said tip portion (21) has a transverse cross-sectional area substantially smaller than the transverse cross-sectional area of the first portion and with lower air resistance, said tip portion (21) being generally circular in cross section, that is, having a first axis (D) extending transversely of the casting plane of the rod and the same as or a maximum of 1.05 times larger than a second axis (d) extending in said casting plane so as to avoid anisotropic bending of the tip portion (21) transversely of the casting plane; and said connecting portion (22) has a transverse cross-sectional shape which changes progressively from the transverse cross-sectional shape of the first rod section (10) to that of said tip portion (21) in a direction along said connecting portion (22) towards said tip portion (21).

2. A fishing rod according to claim 1, wherein said first rod section (10) has a cross-sectional shape formed so as to be easily grasped in the hand at said grip portion (11).

3. A fishing rod according to claim 1 or claim 2 wherein is provided a third rod section (30) for connecting said first rod section (10) to said second rod section connecting portion (22) said third rod section (30) having a streamlined transverse cross-sectional shape, said connecting portion (22) of said second rod section (20) changing in transverse cross-sectional shape from said stream-lined shape to the transverse cross-sectional of the tip portion (21) in a direction along said connecting portion (22) towards said tip portion (21).

4. A fishing rod according to claim 3 wherein said third rod section (30) has an elliptical transverse cross-sectional shape, and said first and third rod sections (10, 30) are elliptical in transverse cross-sectional shape and substantially symmetrical about the major and minor axes (D,d) of said elliptical transverse cross-sectional shape.

5. A fishing rod according to claim 4, wherein the ratio of the major axis (D) to the minor axis (d), of the elliptical transverse cross-sectional shape of said first rod section (10), is from 1.05 to 1.2:1, and the ratio of the major axis (D) to the minor axis (d) of the elliptical cross-section shape of said third rod section (30) is from 1.05 to 1.5:1.

6. A fishing rod according to claim 5, wherein the ratio of the major axis (D) to the minor axis (d) of the elliptical cross-sectional shape of said first rod section (10) is 1.1:1, and the ratio of the major axis (D) to the minor axis (d) of the elliptical cross-sectional shape of said third rod section is 1.3:1.

7. A fishing rod according to claim 5 or claim 6, wherein said tip portion (21) of said second rod section (20) has a transverse cross-sectional shape which is elliptical with major and minor axes (D, d), being in the ratio of 1.05:1.

**Revendications**

1. Canne à pêche (1) qui comprend un premier élément de canne (10), pourvu d'une poignée (11) et dont la section diminue vers une extrémité avant du premier élément de canne (10), et un deuxième élément de canne (20) comportant un scion (21) et une partie de jonction (22) raccordée directement ou indirectement à l'extrémité avant du premier élément de canne (10) et dont la section diminue vers le scion (21) dans une direction d'éloignement de la partie de jonction (22), ladite canne étant caractérisée en ce que le premier élément de canne (10) présente une configuration de section transversale avant un axe principal (D) plus grand que son petit axe (d), ledit axe principal (D) étant situé dans le plan de lancer de la canne, de façon à réduire la résistance de l'air pendant le lancer; en ce que le scion (21) présente une section transversale de surface sensiblement plus petite que la surface de la section transversale du premier élément, avec une résistance de l'air plus petite, le scion (21) ayant une section transversale sensiblement circulaire avec un premier axe (D) disposé transversalement au plan du lancer de la canne et égal ou au maximum 1,05 fois supérieur à un deuxième axe (d) s'étendant dans le plan du lancer, de façon à éviter la flexion anisotrope du scion (21) transversalement au plan du lancer; et en ce que la partie de jonction (22) présente une configuration de section transversale qui varie progressivement, de la configuration de section transversale du premier élément de canne (10) à celle du scion (21), le long de la partie de jonction (22) en direction du scion (21).

2. Canne à pêche suivant la revendication 1, caractérisée en ce que le premier élément de canne (10) a une section transversale d'une forme qui permet de la saisir facilement en main, à l'endroit de la poignée (11).

3. Canne à pêche suivant la revendication 1 ou 2, caractérisée en ce qu'elle comprend un troisième élément de canne (30) pour relier le premier élément de canne (10) à la partie de jonction (22) du deuxième élément de canne, ce troisième élément de canne (30) ayant une section transversale de forme aérodynamique, la partie de jonction (22) du deuxième élément de tige (20) ayant une section transversale qui varie de ladite forme aérodynamique à la section transversale du scion (21), le long de la partie de jonction (22) en direction du scion (21).

4. Canne à pêche suivant la revendication 3, caractérisée en ce que le troisième élément de canne (30) a une section transversale de forme elliptique, et en ce que les premier et troisième éléments de canne (10, 30) ont une section transversale de forme elliptique et sensiblement symétrique par rapport aux grand et petit axes (D, d) de ladite section transversale de forme elliptique.

5. Canne à pêche suivant la revendication 4, caractérisée en ce que le rapport du grand axe (D) au petit axe (d) de la section transversale de forme elliptique du premier élément de canne (10) est de 1,05 à 1,2:1, et le rapport du grand axe (D) au petit axe (d) de la section transversale de forme elliptique du troisième élément de canne (30) est de 1,05 à 1,5:1.

6. Canne à pêche suivant la revendication 5, caractérisée en ce que le rapport du grand axe (D) au petit axe (d) de la section transversale de forme elliptique du premier élément de canne (10) est de 1,1:1, et le rapport du grand axe (D) au petit axe (d) de la section transversale de forme elliptique du troisième élément de canne est de 1,3:1.

7. Canne à pêche suivant la revendication 5 ou 6, caractérisée en ce que le scion (21) du deuxième élément de canne (20) a une configuration de section transversale qui est elliptique avec des grand et petit axes (D, d) qui sont dans le rapport 1,05:1.

## Patentansprüche

1. Angelrute (1), bestehend aus einem ersten, mit einem Griffteil (11) versehenen und sich zu seinem Vorderende hin verjüngenden Rutenabschnitt (10) und einem zweiten, mit einem Spitzenteil (21) und einem Verbindungsteil (22) versehenen Rutenabschnitt (20), wobei das Verbindungsteil (22) mittelbar oder unmittelbar am Vorderende dieses ersten Rutenabschnitts (10) angefügt ist und sich in einer Richtung von sich hinweg zu jenem Spitzenteil (21) hin verjüngt, dadurch gekennzeichnet, dass dieser erste Rutenabschnitt (10) eine transversale Querschnittsgestalt mit einer grossen Achse (D) aufweist, die länger als deren kleine Achse (d) ist und in der Wurfebene dieser Rute verläuft, um den Luftwiderstand beim Werfen zu verringern, dieses Spitzenteil (21) eine transversale Querschnittsfläche, die erheblich kleiner als beim ersten Teil ist, und einen niedrigeren Luftwiderstand besitzt, wobei dieses Spitzenteil (21) im Querschnitt allgemein kreisförmig ist, d.h. eine senkrecht zur Wurfebene der Rute verlaufende erste Achse (D) aufweist, die gleich oder höchstens 1,05 mal so lang wie eine zweite, in dieser Wurfebene verlaufende Achse (d) ist, um anisotropes Biegen des Spitzenteils (21) senkrecht zur Wurfebene zu vermeiden, und dieses Verbindungsteil (22) eine transversale Querschnittsgestalt aufweist, die sich von derjenigen des ersten Rutenabschnitts (10) zu der jenes Spitzenteils (21) entlang diesem Verbindungsteil (22) zu jenem Spitzenteil (21) hin fortschreitend ändert.

2. Angelrute nach Anspruch 1, worin dieser erste Rutenabschnitt (10) im Querschnitt so gestaltet ist, dass er an jenem Griffteil (11) leicht mit der Hand greifbar ist.

3. Angelrute nach Anspruch 1 oder 2, worin ein dritter Rutenabschnitt (30) zum Verbinden dieses ersten Rutenabschnitts (10) mit jenem Verbindungsteil (22) des zweiten Rutenabschnitts vorgesehen ist, wobei dieser dritte Rutenabschnitt (30) eine stromlinienförmige transversale Querschnittsgestalt aufweist und wobei sich die transversale Querschnittsgestalt dieses Verbindungsteils (22) jenes zweiten Rutenabschnitts (20) von dieser stromlinienförmigen Gestalt in Richtung entlang diesem Verbindungsteil (22) zu jenem Spitzenteil (21) hin zu dessen transversale Querschnittsgestalt ändert.

4. Angelrute nach Anspruch 3, worin dieser dritte Rutenabschnitt (30) eine elliptische transversale Querschnittsgestalt aufweist und diese ersten und dritten Rutenabschnitte (10, 30) in transversaler Querschnittsgestalt elliptisch und zu den grossen und kleinen Achsen (D, d) dieser elliptischen transversalen Querschnittsgestalt im wesentlichen symmetrisch sind.

5. Angelrute nach Anspruch 4, worin das Verhältnis der grossen Achse (D) zur kleinen Achse (d) der elliptischen transversalen Querschnittsgestalt dieses ersten Rutenabschnitts (10) 1,05 bis 1,2:1 und das Verhältnis der grossen Achse (D) zur kleinen Achse (d) der elliptischen Querschnittsgestalt jenes dritten Rutenabschnitts (30) 1,05 bis 1,5:1 beträgt.

6. Angelrute nach Anspruch 5, worin das Verhältnis der grossen Achse (D) zur kleinen Achse (d) der elliptischen Querschnittsgestalt jenes ersten Rutenabschnitts (10) 1,1:1 und das Verhältnis der grossen Achse (D) zur kleinen Achse (d) der elliptischen Querschnittsgestalt jenes dritten Rutenabschnitts 1,3:1 beträgt.

7. Angelrute nach Anspruch 5 oder 6, worin dieses Spitzenteil (21) jenes zweiten Rutenabschnitts (20) eine transversale Querschnittsgestalt aufweist, die elliptisch mit grossen und kleinen Achsen (D, d) in einem Verhältnis von 1,05:1 ist.

# FIG. 1

# FIG.2

# FIG.3

# FIG.4

# FIG.5

# FIG.6

# FIG. 7